# EUROPÄISCHE PATENTANMELDUNG

(11) **EP 1 160 555 A2**
(43) Veröffentlichungstag der Anmeldung: **05.12.2001**
(21) Anmeldenummer: 01113148.9
(22) Anmeldetag: 30.05.2001
(51) Int. Cl.: G01L 1/22

(54) **Doppelbiegebalken-Kraftaufnehmer**

(30) Priorität: 31.05.2000 DE 10027116
(71) Anmelder: HBM Mess- und Systemtechnik GmbH, 64293 Darmstadt (DE)
(72) Erfinder: Andrae, Jürgen, 64331 Weiterstadt (DE)
(74) Vertreter: Behrens, Helmut, Dipl.-Ing.

(57) **Zusammenfassung**

Die Erfindung betrifft einen Kraftaufnehmer, der als Doppelbiegebalkenaufnehmer ausgebildet ist und sowohl für Zug- als auch für Druckkräfte vorgesehen ist. Der Doppelbiegebalkenaufnehmer verfügt über eine waagerecht verlaufende Aussparung (3), auf deren Ober- und Unterseite Bereiche mit verringertem Materialquerschnitt vorgesehen sind, die Biegestellen (8, 31) darstellen und auf deren ebenen Deckflächen (23, 24, 39, 40) Dehnungsmeßstreifen (11, 12) appliziert sind. Seitlich neben den Lenkern (9, 10, 30) des Doppelbiegebalkens (6, 32, 33) sind horizontal verlaufende Kraftrückführungselemente (2, 16, 27) angeordnet, die über Querstege (7, 41) mit dem Doppelbiegebalken (6, 32, 33) verbunden sind. Dadurch sind die Kraftrückführungselemente (2, 16, 27) weitgehend so in den Aufnehmer integriert, daß die Kraftein- und -ausleitung in einer durchgehenden Belastungslinie (25, 26) zentrisch zwischen den Lenkern (30) oder exzentrisch neben den Lenkern (9, 10) erfolgt.

## Beschreibung

Die Erfindung betrifft einen Kraftaufnehmer, der als Doppelbiegebalken ausgebildet ist, gemäß dem Oberbegriff des Patentanspruchs 1.

Derartige Kraftaufnehmer werden nicht nur zu Wägezwecken eingesetzt, sondern sollen häufig auch mit Zug- und Druckkräften beaufschlagt werden. Deshalb müssen die Kraftaufnehmer konstruktiv so ausgestaltet sein, daß die Meßkraft mindestens in zwei gegenläufige Kraftrichtungen ein- und ausleitbar ist, ohne daß das Meßergebnis dadurch verfälscht würde. Da bei Biegebalkenaufnehmern die Krafteinleitungs- und Kraftaufnahmebereiche grundsätzlich nicht symmetrisch zu einer Linie verlaufen, treten erhebliche Momente im oder am Biegebalken auf, die zu erheblichen unsymmetrischen Belastungen führen und die von mechanischen Abstützvorrichtungen aufgenommen werden müssen, was insbesondere bei wechselnden Belastungen mit Druck- und Zugkräften sehr aufwendig ist. Um derartige Abstützvorrichtungen bei Kraftaufnehmern in Biegebalkentechnik zu vermeiden, wird häufig angestrebt, diese so auszubilden, daß die Krafteinleitungs- und Kraftaufnahmeachsen weitgehend auf einer axialen Linie mittig durch den Kraftaufnehmer oder zumindest symmetrisch zu einer Linie verlaufen.

Ein derartiger Kraftaufnehmer nach dem Prinzip des Doppelbiegebalkens mit in einer Linie verlaufenden Kraftein- und Ausleitungsmöglichkeiten ist aus dem Produkt-Katalog 1999 der Firma Hottinger Baldwin Messtechnik GmbH in Darmstadt, Seite 34 bis 37, vorbekannt. Dieser Kraftaufnehmer mit der Typenbezeichnung S2 stellt einen Doppelbiegebalkenaufnehmer dar, an dem oberhalb und unterhalb des Doppelbiegebalkens jeweils ein Kraftrückführungselement angeschraubt ist, das in einer Linie verlaufende Gewindebohrungen besitzt, durch die die Krafteinund -ausleitungen erfolgen. Durch diese angeschraubten Kraftrückführungselemente können allerdings bei großen Nennkräften an den Übergangsflächen reibungsbedingte Hystereseerscheinungen auftreten, die zu Meßwertverfälschungen führen.

Aus dem vorbezeichneten Firmenkatalog der Fa. Hottinger Baldwin Messtechnik ist ein weiterer Doppelbiegebalkenaufnehmer mit der Typbezeichnung S9 bekannt, bei dem die Kraftrückführungselemente aus einem gemeinsamen Materialblock ausgearbeitet sind, so daß die Hysterese an den Übergangsstellen vermieden wird. Allerdings sind bei dieser Ausführung die Dehnungsmeßstreifen nur an schwer zugänglichen Rundungen der Aussparungen applizierbar, so daß eine genaue Platzierung und Anbringung der Dehnungsmeßstreifen dort schwierig ist und bei ungenauer Platzierung zu Meßwertverfälschungen führen kann.

Der Erfindung liegt deshalb die Aufgabe zugrunde, einen hochgenauen, zu einer Linie symmetrisch belastbaren Doppelbiegebalkenaufnehmer mit geringer Bauhöhe zu schaffen.

Diese Aufgabe wird durch die im Patentanspruch 1 angegebene Erfindung gelöst. Weiterbildungen und vorteilhafte Ausführungsbeispiele der Erfindung sind in den Unteransprüchen angegeben.

Die Erfindung hat den Vorteil, daß der Aufnehmer wegen seiner verhältnismäßig breiten Bauart weitgehend unempfindlich gegen Querkräfte und Biegemomente ist und deshalb auch bei nicht ganz exakter Kraftein- oder -ausleitung noch sehr genaue Meßergebnisse liefert.

Weiterhin besitzt die Erfindung durch die seitlich angeordneten Kraftrückführungselemente an den Biegezonen vorteilhafterweise gut zugängliche Stellen zur Applizierung der Dehnungsmeßstreifen, wodurch der Kraftaufnehmer einfach und präzise herstellbar ist.

Zusätzlich besitzt die Erfindung noch den Vorteil, daß durch die seitliche Anordnung der Kraftrückführungselemente die Bauhöhe grundsätzlich nicht größer sein muß als die des Doppelbiegebalkens ohne Kraftrückführungselemente, so daß sich eine sehr niedrige Bauhöhe ergibt.

Bei einer besonderen Ausbildung der Erfindung ist vorteilhafterweise der Spalt zwischen den Kraftrückführungselementen zugleich als Überlastsicherung ausgebildet, so daß eine Beschädigung durch Überlastung des Aufnehmers weitgehend vermeidbar ist.

Die Erfindung wird anhand eines Ausführungsbeispiels, das in der Zeichnung dargestellt ist, näher erläutert. Es zeigen:
- Fig. 1:: einen Kraftaufnehmer mit exzentrischer Kraftrückführung in Draufsicht;
- Fig. 2:: einen Kraftaufnehmer mit exzentrischer Kraftrückführung als Ansicht von unten;
- Fig. 3:: einen Kraftaufnehmer mit exzentrischer Kraftrückführung in Vorderansicht;
- Fig. 4:: einen Kraftaufnehmer mit zentrischer Kraftrückführung in Draufsicht, und
- Fig. 5:: einen Kraftaufnehmer mit zentrischer Kraftrückführung in Vorderansicht.

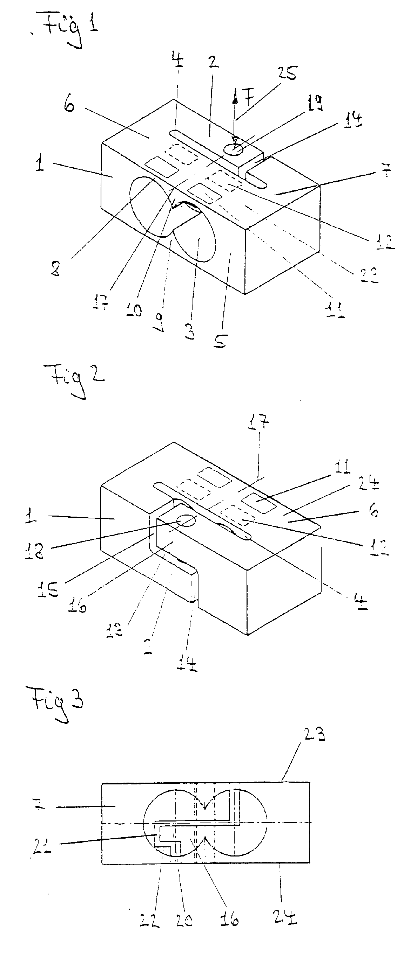

In Fig. 1 der Zeichnung ist ein Kraftaufnehmer in Draufsicht dargestellt, der als Doppelbiegebalkenaufnehmer ausgebildet ist und seitlich neben dem Doppelbiegebalken 6 angeordnete biegesteife Kraftrückführungselemente 2, 16 besitzt, in die die zu messende Kraft F symmetrisch zu einer durchgehenden Belastungslinie 25 ein- und ausleitbar ist.

Der Kraftaufnehmer mit den Kraftrückführungselementen 2, 16 ist aus einem einstückigen quaderförmigen Materialkörper 1 ausgearbeitet und besteht aus Aluminium, einer Eisenlegierung oder einem anderen biegeelastischen Werkstoff. In dem Materialkörper 1 sind horizontal seitlich zwei ineinander übergehende Bohrungen eingelassen, die eine waagerecht verlaufende Aussparung 3 bilden. Diese Aussparung 3 wird von einem vertikal durchgehenden Längsschlitz 4 begrenzt, der parallel zu den Seitenflächen 5 des Materialkörpers 1 verläuft und diesen längsseitig in den Biegebalkenbereich 6 und den Bereich der Kraftrückführungselemente 2, 16 unterteilt. An den Enden des Längsschlitzes 4 sind Materialstege 7 belassen, die eine biegesteife Verbindung beider Teile bewirken.

Die Aussparung 3 enthält an den beiden Stellen mit dem größten Durchmesser Bereiche mit verringertem Materialquerschnitt, die insgesamt vier Biegestellen 8 des Doppelbiegebalkens 6 bilden. Der jeweils zwischen den Biegestellen 8 verbleibende Materialsteg bildet jeweils einen oberen Lenker 10 und einen unteren Lenker 9, die beide parallel zueinander verlaufen. Der Doppelbiegebalken 6 verfügt oben über eine ebene Deckfläche 23, auf der mindestens zwei oder vorteilhafterweise auch vier Dehnungsmeßstreifen 11, 12 im Bereich der Biegestellen 8 appliziert sind.

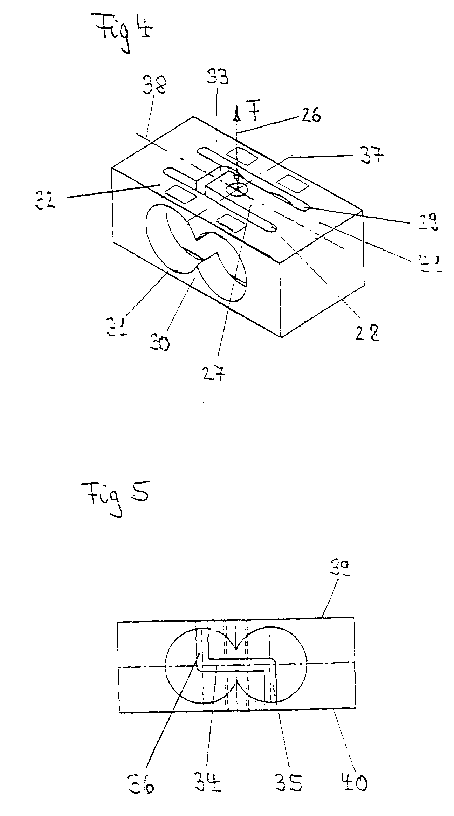

In Fig. 2 der Zeichnung ist der Kraftaufnehmer aus Sicht von unten dargestellt und dabei mit den selben Bezugsziffern für die funktionsgleichen Teile wie nach Fig. 1 versehen. Aus Fig. 2 der Zeichnung ist ersichtlich, daß der Biegebalken 6 auch unten über eine ebene Begrenzungsfläche oder Deckfläche 24 verfügt, auf der ebenfalls im Bereich der Biegestellen zwei oder vier Dehnungsmeßstreifen 1, 12 appliziert sind.

Die Kraftrückführungselemente 2, 16 bestehen im wesentlichen aus zwei seitlich neben dem Doppelbiegebalken 6 horizontal verlaufenden Schenkeln, die im wesentlichen durch einen horizontalen Schlitz 13 und zwei vertikale Schlitze 14, 15 aus dem Materialkörper 1 herausgearbeitet sind. Dabei sind die beiden Kraftrückführungsschenkel 2, 16 parallel übereinander angeordnet und nur durch den horizontalen Schlitz 13 in der Höhe voneinander getrennt. Beide Kraftrückführungsschenkel 2, 16 sind gleich groß ausgebildet aber in Längsrichtung gegengerichtet angeordnet. Beide Kraftrückführungselemente 2, 16 überragen in horizontaler Richtung die quer verlaufende Mittellinie 17 des Doppelbiegebalkens 6 und enthalten symmetrisch zu dieser Mittellinie 17 jeweils eine vertikale Gewindebohrung 18, 19, durch die die Kraftein- und Kraftausleitung erfolgt.

In die Gewindebohrungen 18, 19 sind nicht dargestellte Kraftübertragungselemente einschraubbar, durch die die Druck- oder Zugbelastung 25 in den Kraftaufnehmer ein- und ausleitbar ist. Da sich die Gewindebohrungen 18, 19 seitlich neben dem Doppelbiegebalken 6 befinden, erfolgt die Kraftein- und Kraftausleitung in den Biegebalken 6 exzentrisch, aber symmetrisch zur quer verlaufenden Mittellinie 17 und den Biegestellen 8. Durch die seitliche Anordnung der Kraftrückführungselemente 2, 16 wird eine besonders flache Bauart erreicht, die auch eine besonders günstige Materialausnutzung ermöglicht. Im übrigen gestattet eine solche Anordnung die Dehnungsmeßstreifen 11, 12 auf den von beiden Seiten gut zugänglichen ebenen Deckflächen 23, 24 zu applizieren, wodurch eine hohe Plazierungsgenauigkeit erreichbar ist. Da die gesamte Deckfläche 23, 24 des Biegebalkens 6 zur Applizierung mit Dehnungsmeßstreifen 11, 12 zur Verfügung steht, können auf jeder Deckfläche mindestens zwei Halbbrücken vorgesehen werden, die mit den zwei Halbbrükken der unteren Deckfläche 24 zu zwei Vollbrücken verschaltbar sind und somit eine hohe und genaue Meßsignalerfassung ermöglichen. Darüber hinaus ist ein derartiger Kraftaufnehmer auf einfachste Weise herstellbar, da er aus einem Stück lediglich durch Bohrungen 3, 18, 19 und Schlitze 4, 13, 14, 15 mittels einer programmgesteuerten Bohr- und Fräsmaschine automatisch herstellbar ist.

Da die biegesteifen Kraftrückführungsschenkel 2, 16 in Druckrichtung nur durch einen Schlitz 13 getrennt sind, kann dieser beispielsweise durch eine funkenerodierende Bearbeitung auch so schmal ausgebildet werden, daß gleichzeitig in Druckrichtung eine Überlastsicherung durch einen Schlitzabstand von 0,2 bis 0,8 mm gebildet wird.

In Fig. 3 der Zeichnung ist eine Ausführung der Erfindung dargestellt, nach der die Überlastsicherung sowohl in Druck- als auch in Zugrichtung wirkt. Im Grunde handelt es sich um den gleichen Kraftaufnehmer, der bereits zu Fig. 1 und zu Fig. 2 der Zeichnung beschrieben ist. Lediglich der untere Kraftrückführungsschenkel 16 verfügt an seinem freien Ende über einen nasenförmigen Vorsprung 20, der in eine gegenüberliegende erweiterte Aussparung 21 des Quersteges eingreift. Dabei ist der Vorsprung 20 nach beiden Kraftrichtungen 25 durch einen schmalen Überlastschlitz 22 von ca. 0,2 bis 0,8 mm Breite getrennt, so daß dies als Überlastsicherung sowohl in Druck- als auch in Zugrichtung wirkt.

In Fig. 4 der Zeichnung ist ein Kraftaufnehmer mit zentrischer Kraftein- und -ausleitung 26 dargestellt. Dabei sind die Kraftrückführungselemente 27 im Grunde durch zwei vertikale Längsschlitze 28, 29 zwischen den Lenkern 30 und Biegestellen 31 der beiden Hälften des Doppelbiegebalkens 32, 33 angeordnet. Beide Hälften des Doppelbiegebalkens 32, 33 sind symmetrisch zu einer Längs- 38 und einer Quermittellinie 37 ausgebildet und mittels zweier massiver Querstege 41 miteinander und mit dem Kraftrückführungselementen 27 biegesteif verbunden.

In Fig. 5 der Zeichnung ist die Seitenansicht des Kraftaufnehmers nach Fig. 4 dargestellt und für die gleichartigen Bauteile mit gleichen Bezugsziffern versehen. Aus Fig. 5 ist ersichtlich, daß die Kraftrückführungselemente 27 ebenfalls durch vertikale Schlitze 35, 36 und einen horizontalen Schlitz 34 aus einem Materialkörper ausgearbeitet sind und im Grunde den biegesteifen Kraftrückführungsschenkeln nach Fig. 1 und 2 der Zeichnung entsprechen.

Beide biegesteifen Kraftrückführungselemente 27 enthalten eine zentrische Gewindebohrung, die beide vertikal verlaufen und symmetrisch zu der Längs- 38 und Quermittellinie 37 um eine durchgehende Belastungslinie 26 angeordnet sind. Die Dehnungsmeßstreifen sind auch symmetrisch zu den beiden Mittellinien 37, 38 auf einer oder auf beiden ebenen Deckflächen 39, 40 im Bereich der Biegestellen 31 appliziert und erzeugen bei einer Belastung mit Zug- oder Druckkräften ein Signal, das diesen Kräften F proportional ist.

Die vorstehend beschriebene Ausführungsvariante hat gegenüber der Ausführung nach Fig. 1 und Fig. 2 zusätzlich noch den Vorteil, daß die Kraftein- und -ausleitung weitgehend frei von Querkräften und Biegemomenten erfolgen kann oder daß sie sich durch ihre gegenläufige Aufteilung weitgehend aufheben und so nicht in den Meßwert einfließen. Die Ausführungsvariante nach Fig. 4 und Fig. 5 wird vorteilhafterweise mit jeweils vier Dehnungsmeßstreifen in Halbbrückenschaltung auf der oberen und der unteren Deckflächenseite 39, 40 appliziert, die zu zwei Vollbrücken verschaltet werden, um eine hohe und genaue Meßsignalauswertung zu ermöglichen. Der Kraftaufnehmer nach Fig. 4 und 5 ist sowohl für eine Kraftbeaufschlagung in Druck- und Zugrichtung verwendbar und kann auch mit einer Überlastsicherung ausgestattet sein, die durch eine Breite des Horizontalschlitzes von 0,2 bis 0,8 mm gebildet wird.

Da die beiden Gewindebohrungen in den beiden Kraftrückführungselementen 27 symmetrisch zu einer durchgehenden Belastungslinie 26 verlaufen, kann die Kraftein- und Kraftausleitung vorteilhafterweise auch nur von einer Deckflächenseite 39, 40 her erfolgen. Dies ist dadurch erreichbar, daß die nicht dargestellten Kraftübertragungselemente in den Gewindebohrungen koaxial zueinander ausgebildet werden, um von einer Deckflächenseite 39, 40 unabhängig voneinander sowohl Druckals auch Zugkräfte in den Aufnehmer einzuleiten.

## Patentansprüche

1. Kraftaufnehmer, der als Doppelbiegebalken (6, 32, 33) ausgebildet ist, der über eine waagerecht verlaufende Aussparung (3) verfügt, auf deren Ober- und Unterseite Bereiche mit verringertem Materialquerschnitt vorgesehen sind, die Biegestellen (3, 31) darstellen und daß sich zwischen den Biegestellen (3, 31) zwei Lenker (9, 10, 30) einer Parallelführung ergeben und daß das Meßsignal durch Dehnungsmeßstreifen (11, 12) an den Biegestellen (8, 31) erzeugt wird, wobei die Kraftein- und-ausleitung über biegesteife Kraftrückführungselemente (2, 16, 27) symmetrisch zu einer durchgehenden Belastungslinie (25, 26) erfolgt, **dadurch gekennzeichnet, daß** die Kraftrückführungselemente (2, 16, 27) seitlich neben den Lenkern (9, 10, 30) angeordnet sind.

2. Kraftaufnehmer nach Anspruch 1, **dadurch gekennzeichnet, daß** die Kraftrückführungselemente (2, 16, 27) aus einem oberen Schenkel (2, 27) und einem unteren Schenkel (16) gebildet sind, die parallel zueinander verlaufen und sich horizontal überlappen.

3. Kraftaufnehmer nach Anspruch 1 oder 2, **dadurch gekennzeichnet, daß** die Kraftrückführungselemente (2, 16, 27) gegenüberliegende Belastungsmittel (18, 19) enthalten, die symmetrisch zu einer quer verlaufenden Mittellinie (17) oder einer quer (37) und längs verlaufenden Mittellinie (32) angeordnet sind und in die die Zugund/oder Druckkräfte (F) einleitbar sind.

4. Kraftaufnehmer nach einem der vorhergehenden Ansprüche, **dadurch gekennzeichnet, daß** die Kraftrückführungselemente (2, 16, 27) durch eine oder mehrere Längsschlitze (4, 28, 29) vom Doppelbiegebalken (6) oder Teilen (32, 33) des Doppelbiegebalkens getrennt sind, wobei diese an den Enden der Längsschlitze (4, 28, 29) durch Querstege (7, 41) mit dem Doppelbiegebalken (6) oder Teilen (32, 33) des Doppelbiegebalkens verbunden sind.

5. Kraftaufnehmer nach einem der vorhergehenden Ansprüche, **dadurch gekennzeichnet, daß** der Doppelbiegebalken (6) oder Teile (32, 33) des Doppelbiegebalkens und die Kraftrückführungselemente (2, 16, 27) aus einem einstückigen Materialkörper (1) bestehen.

6. Kraftaufnehmer nach einem der vorhergehenden Ansprüche, **dadurch gekennzeichnet, daß** die Kraftrückführungselemente (2, 16, 27) so in den Materialkörper (1) integriert sind, daß sie nicht oder nicht nennenswert über die Höhe des Doppelbiegebalkens (6, 32, 33) hinausragen.

7. Kraftaufnehmer nach einem der vorhergehenden Ansprüche, **dadurch gekennzeichnet, daß** die Kraftrückführungselemente so neben dem Doppelbiegebalken (6) oder Teilen (32, 33) des Doppelbiegebalkens angeordnet sind, daß die Kraftein- und -ausleitung zentrisch (26) oder exzentrisch (25) erfolgt.

8. Kraftaufnehmer nach einem der vorhergehenden Ansprüche, **dadurch gekennzeichnet, daß** der Doppelbiegebalken (6, 32, 33) so ausgebildet ist, daß die Kraftein- und-ausleitung sowohl in Zug- als auch in Druckrichtung einleitbar ist.

9. Kraftaufnehmer nach einem der vorhergehenden Ansprüche, **dadurch gekennzeichnet, daß** auf einer oder beiden ebenen Deckflächen (23, 24, 39, 40) des Doppelbiegebalkens jeweils mindestens zwei oder vier Dehnungsmeßstreifen (11, 12) appliziert und zu Halbbrücken verschaltet sind, die zu einer oder mehreren Vollbrücken verschaltbar sind.

10. Kraftaufnehmer nach einem der vorhergehenden Ansprüche, **dadurch gekennzeichnet, daß** die Kraftübertragungsmittel so ausgebildet sind, daß die Kraftein- und -ausleitung von einer gemeinsamen Deckflächenseite (23, 24, 39, 40) her erfolgt.

11. Kraftaufnehmer nach einem der vorhergehenden Ansprüche, **dadurch gekennzeichnet, daß** der oder die zwischen den Kraftrückführungselementen (2, 16, 27) vorgesehenen Horizontalschlitze (13, 34, 22) eine vorbestimmbare Breite von 0,2 bis 0,8 mm aufweisen und dadurch als Überlastsicherung wirken.
